# EUROPÄISCHE PATENTSCHRIFT

(11) **EP 0 954 840 B1**
(45) Veröffentlichungstag und Bekanntmachung des Hinweises auf die Patenterteilung: **02.05.2002**
(21) Anmeldenummer: 98904103.3
(22) Anmeldetag: 20.01.1998
(51) Int. Cl.: G09G 3/00, G09F 19/12

(54) **VORRICHTUNG ZUR ANZEIGE VON ALPHA-NUMERISCHEN ZEICHEN UND/ODER BILDZEICHEN**
DEVICE FOR DISPLAYING ALPHA NUMERIC SYMBOLS AND/OR GRAPHIC SYMBOLS
DISPOSITIF POUR AFFICHER DES CARACTERES ALPHANUMERIQUES ET/OU DES SYMBOLES GRAPHIQUES

(30) Priorität: 27.01.1997 DE 19702751
(43) Veröffentlichungstag der Anmeldung: 10.11.1999
(73) Patentinhaber: LUMINO Licht Elektronik GmbH, D-47799 Krefeld (DE)
(72) Erfinder: RONKHOLZ, Karl, Heinz, D-47803 Krefeld (DE)
(86) Internationale Anmeldenummer: EP9800284
(87) Internationale Veröffentlichungsnummer: WO9833164

(56) Entgegenhaltungen:
- WO-A-90/12354

## Beschreibung

Die vorliegende Erfindung betrifft eine Vorrichtung zur Anzeige von alpha-numerischen Zeichen und/oder Bildzeichen nach dem Oberbegriff von Patentanspruch 1.

Vorrichtungen zur Anzeige von alpha-numerischen Zeichen und/oder Bildzeichen sind in der Literatur vielfältig beschrieben und auch in der Praxis eingesetzt worden. Solche Vorrichtungen sind beispielsweise Displays in unterschiedlicher Größe mit in Zeilen und Spalten matrixförmig angeordneten Leuchtdioden (LED's).

Eine Anzeigevorrichtung der gattungsgemäßen Art ist beispielsweise in der internationalen Patentanmeldung PCT/RO95/00013 offenbart. Darin ist eine Reihe von LED's oder LED-Gruppen auf einem entsprechend ausgebildeten Träger in senkrechter Ausrichtung angeordnet, der mit einer konstanten Drehgeschwindigkeit von mehr als 1200 U/min um die senkrechte Achse eines Antriebsmotors rotiert. Das Blockschaltbild enthält u.a. einen Sequenzgenerator zur Erzeugung der Codesequenzen für die Zeichenund Bildfolgen und eine Synchronisationsschaltung zur Erfassung der genauen Winkelposition des rotierenden LED-Trägers, aus der die tatsächliche Drehgeschwindigkeit des LED-Trägers ermittelt und geregelt wird.

Die rotierende LED-Anordnung befindet sich im Inneren eines rotationssymmetrischen Gehäuses aus Acrylglas oder dergleichen lichtdurchlässigem Material. Für den Betrachter wird ein stehendes Bild bzw. eine stehende oder eine sich in der Art einer Laufschrift bewegende, lesbare Zeichen- und/oder Bildfolge auf die Gehäuseoberfläche projiziert, die aus einem Winkelbereich von mehr als 270° für den Betrachter erkennbar ist.

Um eine für den Betrachter gut lesbare Zeichen- und/oder Bildfolge zu erzeugen, ist die richtige Ansteuerung der LED's, insbesondere in Bezug zu der Drehgeschwindigkeit der LED-Anordnung, von entscheidender Bedeutung.

Aufgabe der vorliegenden Erfindung ist es, eine Vorrichtung der eingangs genannten Art zu schaffen, welche mit einer technisch einfachen und insbesondere verschleißfreien Einrichtung der Energieübertragung auf die rotierenden Elemente bzw. die rotierende Anordnung auskommt.

Diese Aufgabe wird durch die Merkmale des Anspruches 1 gelöst. Vorteilhafte Ausgestaltungen und Weiterbildungen der Erfindung sind Gegenstand der Unteransprüche.

Durch die erfindungsgemäßen Maßnahmen einer kontaktlosen Energieübertragung wird eine von jeglichem Verschleiß freie Einrichtung geschaffen, wodurch einerseits Wartungsfreiheit gewährleistet werden kann und andererseits trotz reduzierter Bauteile und vereinfachter Bauweise die Qualität der gesamten Anzeigevorrichtung angehoben wird.

In vorteilhafter Ausbildung dieses Lösungsweges wird als kontaktlose Energieübertragung eine induktive Energieübertragung vorgeschlagen. Dabei kann in einer ersten Alternative ein Rotor vorgesehen sein, dessen Spulen- oder Wicklungsenden mit der Schaltungsplatine bzw. elektrischen oder elektronischen Bauelementen elektrisch fest verbunden sind. Um diesen Rotor ist ein aus Halbschalen gebildeter Stator angeordnet. Der Rotor besitzt zumindest eine Spulenwicklung. Durch die Drehung des Rotors gemeinsam mit der Antriebswelle wird in der Spule durch die äußeren Magnethalbschalen ein Strom erzeugt, der auf die rotierende elektronische Baugruppe (Schaltungsplatine) abgegeben wird.

Vorzugsweise ist der Stator bzw. sind die Halbschalen des Stators als Permanentmagnet ausgebildet. Weiter ist es vorteilhaft, den Rotor mit sechs Spulenpaketen zu versehen, deren Spulenlängsachsen radial ausgerichtet sind, um ein für den Wirkungsgrad und die Wechselspannungsglättung günstigeres Dreiphasensystem zu erzielen.

In einer zweiten Alternative befinden sich im geringen Abstand gegenüberliegend auf der Schaltungsplatine und ortsfest auf der Motorabtriebsseite Ringspulen, welche der Induzierung und Übertragung von elektrischer Energie bei Drehung der Schaltungsplatine dienen.

In Weiterbildung der Erfindung ist die Vorrichtung zum Zwecke der Datenübertragung für die Ansteuerung und Programmierung mit einer PC-Schnittstelle und/oder einer Infrarot-Schnittstelle ausgestattet. Die Infrarot-Schnittstelle ermöglicht die Eingabe einer gewünschten Zeichen- und/oder Bildfolge mittels einer Fernbedienung.

Verschiedene Ausführungsbeispiele der Erfindung werden nachfolgend anhand der Zeichnung näher beschrieben. Es zeigen:
- Figur 1: die Anzeigevorrichtung in ihrem Prinzip-Aufbau im Schnitt entlang der Drehachse der Anordnung;
- Figur 2: einen Ausschnitt der kontaktlosen Energieübertragung in vergrößerter Darstellung gemäß dem Kreis II von Figur 1;
- Figur 3: eine Schnittdarstellung des Ausführungsbeispieles von Figur 3 gemäß der Linie IV-IV in Figur 3;
- Figur 4: eine Alternative des in Figur 3 dargestellten Ausführungsbeispieles in Schnittdarstellung analog der Linie IV-IV in Figur 3; und
- Figur 5: ein weiteres Ausführungsbeispiel der kontaktlosen Energieübertragung in vereinfachter Darstellung im Schnitt.

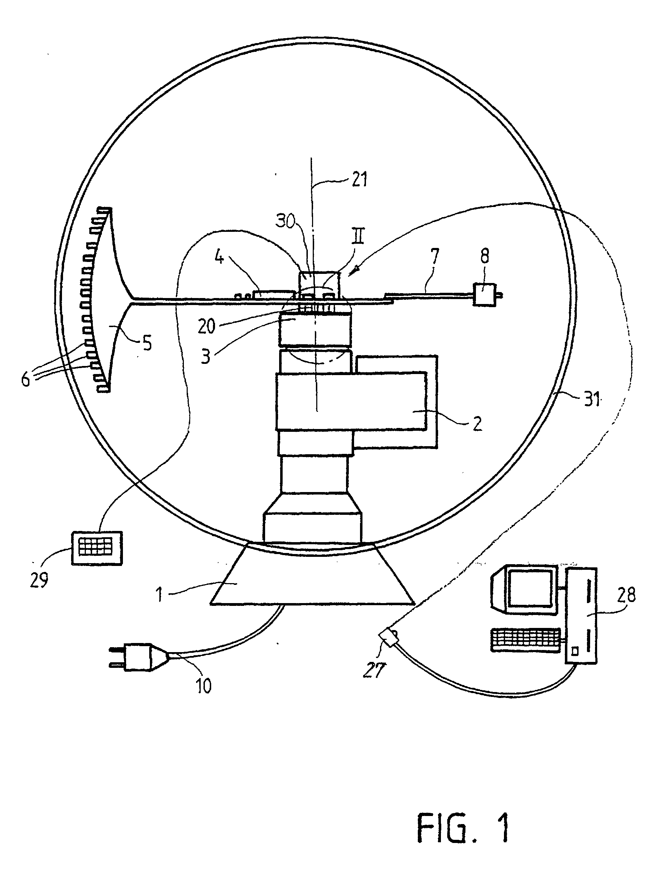

In Fig. 1 ist ein bevorzugtes Ausführungsbeispiel der erfindungsgemäßen LED-Anzeigevorrichtung im Schnitt entlang der Drehachse 21 der Anordnung dargestellt. Auf einem Sockel, Standfuß oder dergleichen Aufstell- oder Stützeinrichtung 1 ist ein Elektromotor 2 montiert, der für eine geeignete Motordrehzahl, beispielsweise von etwa 1000 bis 3000 U/min, bevorzugt etwa 2000 bis 3000 U/min, ausgelegt ist. Als Elektromotor 2 wird üblicherweise ein Synchronmotor verwendet. Natürlich sind auch andere Antriebsmotoren einsetzbar, sofern diese sich für den bestimmungsgemäßen Zweck eignen.

Für die Ankopplung einer Schaltungsplatine 4 an den Elektromotor 2 zur beabsichtigten Drehmitnahme ist auf der Antriebswelle 20 des Elektromotors 2 ein Kupplungsstück 3 befestigt. Auf diesem Kupplungsstück 3 oder auf der Abtriebseite des Kupplungsstückes 3 ist die Schaltungsplatine 4 montiert, die in einem Winkel von etwa 90° zur Drehachse 21 der Antriebswelle 20 orientiert ist. Die Schaltungsplatine 4 enthält die kompletten elektronischen Schaltungen für die Steuerung der Anzeigevorrichtung. Im wesentlichen sind dies die Ansteuerung der Leuchtdioden (LED's) 6 bzw. der LED-Gruppen 6 über geregelte Konstantstromquellen, eine nichtflüchtige Speicherung der alpha-numerischen Zeichen und/oder Bildzeichen und ein Zeichengenerator zur Umsetzung der Zeichenund/oder Bildfolge in die entsprechende LED-Ansteuerung.

Die elektronische Schaltungsplatine 4 dient gleichzeitig als mechanische Halterung für einen in bevorzugter Weise etwa rechtwinklig zur Schaltungsplatine 4, d.h. etwa parallel zur Drehachse 21, angeordneten Träger 5. Auf dem Träger 5 ist mindestens eine vorzugsweise lotrechte Reihe von radial nach außen, d.h. im wesentlichen senkrecht zur Antriebswelle 20 bzw. Drehachse 21 ausgerichteten LED's oder LED-Gruppen 6 angebracht.

Die LED's 6 auf dem Träger 5 sind farbige Leuchtdioden in vorbestimmbarer Farbe und farblicher Reihenfolge. Es können sowohl Leuchtdioden in ständig wechselnden Farben als auch Leuchtdioden von gleicher Farbe eingesetzt werden. Die Farbwahl hängt im wesentlichen von der geplanten Anzeige ab. Ferner ist die Anwendung natürlich nicht auf die in diesem Ausführungsbeispiel verwendete, nur eine LED-Reihe von sechzehn LED's 6 beschränkt. Die Reihe kann insbesondere je nach Anwendungsfall mehr oder weniger LED's 6 aufweisen.

Die Steuerung auf der Schaltungsplatine 4 sorgt entsprechend einer gespeicherten Vorgabe (Programm, Rechnerprogramm) für ein zeitlich vorbestimmtes Aufleuchten der jeweils gewünschten LED's 6. Im allgemeinen sind dabei die Schriftart (fett, kursiv, etc.) und die Laufgeschwindigkeit der Zeichen- und/oder Bildfolge fest vorgegeben, und der Anwender kann nur eine gewünschte Zeichen- und/oder Bildfolge wählen und eingeben. Mit einem aufwendigeren, flexiblen Programmiertool können aber selbstverständlich auch die Schriftart, die Laufgeschwindigkeit oder weitere Parameter der anzuzeigenden Zeichen- und/oder Bildfolge vom Anwender frei ausgewählt werden.

Für die Datenübertragung über eine PC-Schnittstelle 27 im Sockel 1 der Vorrichtung sind geeignete Kontakte vorgesehen. An diese PC-Schnittstelle 27 ist ein Rechner 28 mit Terminal anschließbar, der gleichzeitig auch mit mehreren Anzeigevorrichtungen der beschriebenen Art vernetzt sein kann.

Zusätzlich zur Ansteuerung der Vorrichtung über einen Rechner 28 kann die oben beschriebene Vorrichtung alternativ auch mittels einer Fernbedienung 29 angesteuert werden. Hierzu befindet sich ortsfest auf dem Block des Elektromotors 2 ein Infrarot-Sensor 30, dessen Anschlüsse der Einfachheit halber auf die PC-Kontakte zur Datenübertragung gelegt sind. Der Infrarot-Sensor 30 kann alternativ auch sich mitbewegend an einem drehenden Teil, wie beispielsweise am Träger 5 oder auf der Schaltungsplatine 4 montiert sein. Bei Anbringen des Infrarot-Sensors 30 an einem drehenden Teil wird der Vorteil erzielt, daß aus allen Richtungen mit der Fernbedienung Daten auf die sogenannte Kugelanzeige übertragen werden können.

Der Frequenzbereich der Datenübertragung mit Fernbedienung 29 ist im Prinzip nicht auf den Infrarotbereich beschränkt, bietet sich aber durch den Gebrauch bei handelsüblichen Fernbedienungen an.

Da die Fembedienung 29 im Gegensatz zum Rechner 28 in der Regel keinen Bildschirm oder andere Anzeigeelemente besitzt, um die eingegebenen Daten zu überprüfen, fungiert im Falle der Datenübertragung mittels Fernbedienung 29 die Anzeigevorrichtung mit ihren LED's 6 selbst als Display zur Kontrolle der Dateneingabe.

Durch die hohe Drehzahl an der Antriebswelle 20 des Elektromotors 2 von beispielsweise etwa 3000 U/min wird für den Betrachter der Anzeigevorrichtung ein "stehendes" Bild mit einer Bildwechselfrequenz von etwa 50 Hz erzeugt. Dieses Bild kann entsprechend dem vorgegebenen und programmierten Speicherinhalt ein stehendes oder bewegtes Schriftbild aus alpha-numerischen Zeichen oder aber auch ein Bild sein. Natürlich sind auch Kombinationen solcher Zeichen und Bilder möglich.

Um einen größeren Ablesewinkel für den Betrachter der Anzeigevorrichtung zu erreichen, können die LED-Köpfe 6 abgeschrägt sein, wobei die Abschrägung bevorzugt in der Senkrechten erfolgt. Außerdem können alternativ auch SMD-LED's 6 verwendet werden.

An der dem LED-Träger 5 gegenüberliegenden Seite der Schaltungsplatine 4 ist ein biegsamer (elastisch durchbiegsamer) Federstahlstab 7 befestigt. An dem freien Stirnende des Federstahlstabes 7 befindet sich wahlweise ein Gewicht 8, das in besonders vorteilhafter Weise auf dem Federstahlstab in Längsrichtung verschiebbar ist. Dadurch ist ein optimaler und den baulichen wie den Betriebsverhältnissen angepaßter Gewichtsausgleich möglich.

Statt des Federstahlstabes 7 ist auch ein Stab aus einem anderen Material mit vergleichbaren Eigenschaften einsetzbar, wobei als eine wesentliche Materialeigenschaft die elastische Verformbarkeit gilt. Ferner ist es denkbar, anstelle des Federstahlstabes 7 einen einfach oder mehrfach abklappbaren oder ausklingbaren Stab oder einen Teleskopstab zu wählen, der infolge der Zentrifugalkraft bei Drehung automatisch auf seine Betriebslänge hochklappt bzw. ausfährt.

Bei Beginn der Drehung der Anordnung um die Drehachse 21 richtet sich der Federstahlstab 7 bzw. das äquivalente Stabelement aufgrund der zunehmenden Zentrifugalkraft bis zur waagerechten oder nahezu waagerechten Position bzw. einer in Verlängerung der Schaltungsplatine 4 zu sehenden Position aus und bildet im Betriebszustand somit eine Stabilisierung und einen Gewichtsausgleich der Vorrichtung. Das am Ende des Federstahlstabes 7 angebrachte Gegengewicht 8 kompensiert dabei das Gewicht der eingesetzten LED-Anordnung 5, 6. Die gesamte Anzeigevorrichtung erreicht dadurch einen sicheren Stand, ohne daß es besonderer, zusätzlicher Befestigungen auf einer Unterlage bedarf.

Die Verwendung eines biegsamen, klappbaren oder teleskopartigen Ausgleichselementes 7 anstelle eines starren mechanischen Ausgleichskörpers hat den Vorteil einer einfacheren Montage, insbesondere bei Montage der kompletten Vorrichtung in Gehäuse 31 mit kleinen Aufnahmeöffnungen.

Die gesamte, oben beschriebene Anordnung mit ihren Bauteilen wird üblicherweise in einem geschlossenen Gehäuse 31 montiert. Das Gehäuse 31 ist im wesentlichen ein kugeliges, zylindrisches oder sonstwie rotationssymmetrisch geformtes Gehäuse. Der Kugelkörper 31 besteht aus einem lichtdurchlässigen Werkstoff, beispielsweise Acrylglas, Kunststoff, Glas oder dergleichen. Ein bevorzugt eingesetzter Kugelkörper 31 besitzt einen Durchmesser von etwa 30 cm und weist eine demgegenüber wesentlich kleinere Aufnahmeöffnung auf, durch welche die oben beschriebene Anordnung in das Gehäuse 31 eingeführt wird. Das Gehäuse 31 wird dabei von dem Sockel oder Standfuß 1 getragen, auf dem der Elektromotor 2 montiert ist.

Die Schaltungsplatine 4 könnte prinzipiell auch außerhalb des Gehäuses 31 angebracht sein. In diesem Fall werden die elektrischen Ansteuerungen über elektrische Verbindungen 32 direkt den LED's 6 zugeführt. Die Anordnung der Schaltungsplatine 4 innerhalb des Gehäuses 31 ist jedoch eine bevorzugte Bauweise, weil alle Elemente komplett im Gehäuse 31 untergebracht sind und die LED-Anzeigevorrichtung damit eine in sich autonome Baueinheit bildet. Darüber hinaus bietet das Gehäuse 31 auch einen Schutz für die Schaltungsplatine 4 vor Schmutz und anderen schädlichen Umwelteinflüssen.

Die elektrischen Verbindungen der elektronischen Schaltungsplatine 4, in diesem Ausführungsbeispiel zwei Kontakte zur Energieversorgung und zwei Kontakte zur Datenübertragung, sind zumindest in Bezug auf die Energieübertragung kontaktios ausgebildet. Durch eine entsprechende Durchführung durch den Sockel 1 ist der Elektromotor 2 über ein Versorgungskabel 10 mit dem Stromnetz verbunden, wodurch der Elektromotor 2 bei Einschalten des Systems mit der notwendigen elektrischen Energie versorgt wird.

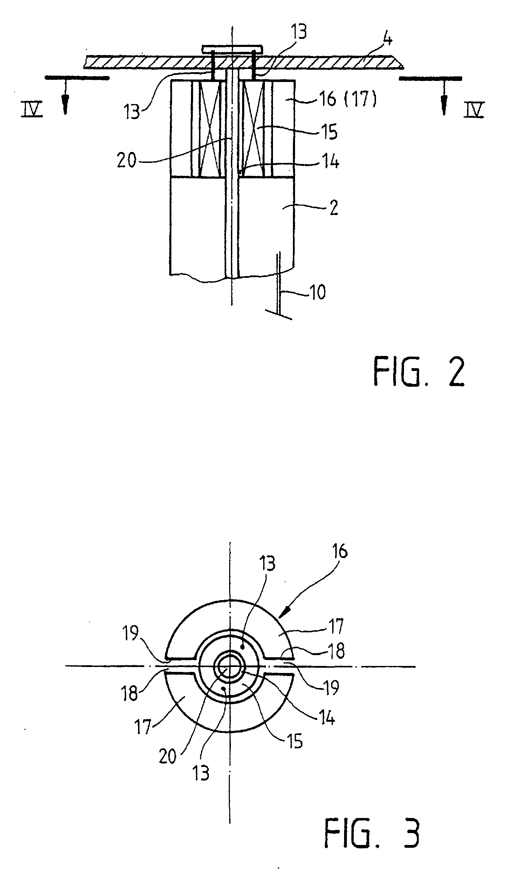

Für die kontaktlose Übertragung von elektrischer Energie auf die Schaltungsplatine 4 wird gemäß den Fig. 2 bis 6 das Induktionsgesetz realisiert. Bei dieser Realisierung wird ausgenutzt, daß in einem elektrischen Leiter eine Spannung erzeugt (induziert) wird, wenn sich der magnetische Fluß durch eine von diesem elektrischen Leiter umschlossene Fläche zeitlich ändert. Dadurch fließt beim Schließen des Kreises ein Strom, ohne daß eine Spannungsquelle in dem Kreis vorhanden ist. Die Spannungserzeugung erfolgt unter bestimmten gesetzmäßigen Voraussetzungen:
- wenn der elektrische Leiter in einem Magnetfeld so bewegt wird, daß er die magnetischen Feldlinien schneidet;
- wenn der elektrische Leiter festgehalten und der Magnet bewegt wird;
- wenn der elektrische Leiter und der Magnet festgehalten, das Magnetfeld aber verändert wird;
- wenn der elektrische Leiter und der Magnet ruhen und bei festem Magnetfeld eine Substanz mit einer anderen relativen Permeabilität in das Magnetfeld eingebracht wird; oder
- wenn der elektrische Leiter verbogen wird.

In allen vorstehend geschilderten Fällen erfolgt die Spannungsinduktion also durch zeitliche Änderung des magnetischen Flusses.

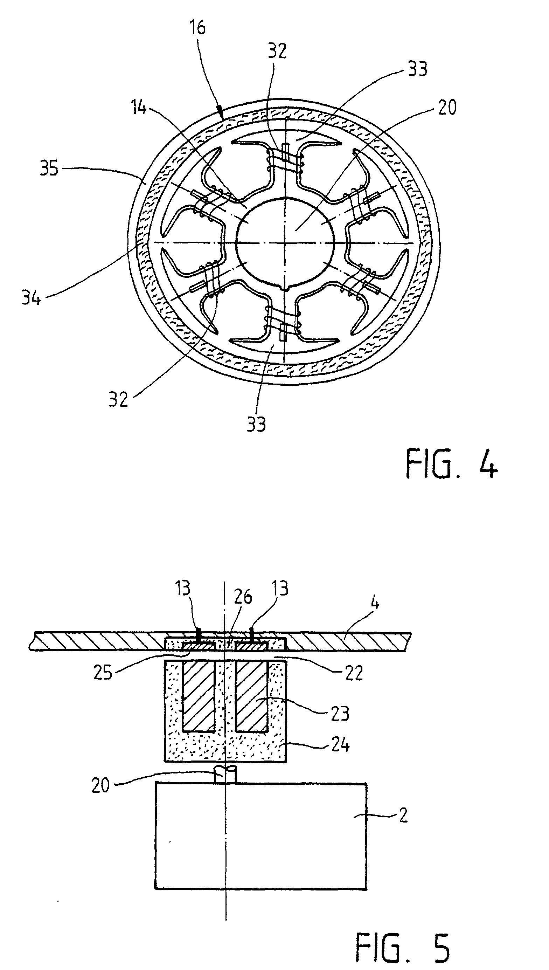

In Fig. 2 ist ein Ausführungsbeispiel für die kontaktlose Energieübertragung schematisch dargestellt. Der Elektromotor 2 ist durch das Versorgungskabel 10 mit einer Energiequelle verbunden und treibt über die Antriebswelle 20 die Schaltungsplatine 4 mit den LED's oder LED-Gruppen 6 an. Gleichzeitig wird durch den Elektromotor 2 ein Rotor 14 mit einer Spulenwicklung 15 in Drehung versetzt. Um den Rotor 14 befindet sich ein aus zwei Halbschalen 17 gebildeter, ortsfest angebrachter 16, wie dies deutlicher aus dem Schnitt von Fig. 4 zu ersehen ist. Der Stator 16 kann an Gleichstrom oder an Wechselstrom angeschlossen werden, oder aber auch ein Permanentmagnet sein. Die zwei Halbschalen 17 des Stators 16 sind mit ihren freien Stirnenden 18 im Abstand 19 zueinander angeordnet, wodurch zwischen ihnen ein Luftspalt entsteht. Mit den Wicklungsenden 13 der Spule 12 ist eine elektrische Verbindung zur Schaltungsplatine 4 angedeutet, die durch die Antriebswelle 20 in Drehung gebracht wird. Die Spule 12 kann mit einem Eisenkern oder Weicheisenkern (nicht gezeigt) versehen sein. Um die Spule 12 gegen Witterungseinflüsse zu schützen, kann sie zumindest teilweise in einer Vergußmasse angeordnet sein.

Statt der zwei Halbschalen 17 können auch mehrere Schalen kreisringförmig um den Rotor 14 eingerichtet sein. Die jeweils gerade Anzahl von Schalen 17 errechnet sich nach der Beziehung n · ½, wobei n eine gerade Zahl ist.

Ein weiteres Ausführungsbeispiel der kontaktlosen Energieübertragung ist in Fig. 5 gezeigt, wobei die Darstellung im wesentlichen dem in Fig. 4 gezeigten Schnitt IV-IV entspricht.

Der ortsfest angebrachte Stator 16 besteht in diesem Fall aus einem Permanentmagneten 34, der von einer Eisenschale 35 umgeben ist. Der sich mit der Antriebswelle 20 des Elektromotors 2 mitdrehende Rotor 14 weist ringförmig angeordnet sechs Spulenkörper 32 auf, deren Spulenlängsachsen radial ausgerichtet sind, so daß die Stirnflächen der Spulenkörper 32 dem Permanentmagneten 34 jeweils etwa parallel gegenüberliegen. Zur Verstärkung der Induktionswirkung sind die sechs Spulenkörper 32 jeweils mit einem Eisenkern oder Weicheisenkern 33 versehen, der vorteilhafterweise einen in Fig. 4 dargestellten ankerförmigen Querschnitt hat. Die Wicklungsenden der Spulenkörper 32 sind wie bei den zuvor beschriebenen Ausführungsbeispielen mit der Schaltungsplatine 4 bzw. mit elektronischen Bauelementen auf der Schaltungsplatine 4 elektrisch verbunden.

Fig. 5 schließlich zeigt in einer weiteren Alternative wieder den Elektromotor 2, der über das Versorgungskabel 10 mit elektrischer Energie versorgt wird und mittels der Antriebswelle 20 die Schaltungsplatine 4 für eine Rotationsbewegung antreibt. Mit einem geringen Luftspalt 22 von etwa bis zu zwei Millimeter ist unterhalb der Schaltungsplatine 4 eine Primärspule 23 mit einem Magnetkern 24 (Eisenkern, Weicheisenkern) angeordnet, wobei die Spulenlängsachse etwa rechtwinklig zur Schaltungsplatine 4 orientiert ist. Dieser Primärspule 23 liegt eine Sekundärspule 25 unterhalb der Schaltungsplatine direkt zugeordnet gegenüber, wobei sich die beiden Stirnseiten der Spulen 23 und 25 etwa parallel zueinander gegenüberliegen. Diese Sekundärspule 25 kann mit einem Magnetkern 26 in die Unterseite der Schaltungsplatine 4 eingelassen sein. Die Sekundärspule 25 kann aber auch auf die Unterseite der Schaltungsplatine 4 aufgebracht oder in Schichttechnik aufgetragen sein.

Die induktive Energieübertragung nach dieser geschilderten Alternative erfolgt durch Beaufschlagung des Primärkreises (Primärspule) mit elektrischer Energie auf die Sekundärspule.

## Patentansprüche

1. Vorrichtung zur Anzeige von alpha-numerischen Zeichen und/oder Bildzeichen, mit einem Gehäuse (31);
einer in dem Gehäuse (31) drehbar um eine Drehachse (21) angeordneten Anzeigeeinheit, welche einen Träger (5), auf dem zumindest eine Reihe von Leuchtdioden oder Leuchtdioden-Gruppen (6) angeordnet ist, und eine Schaltungsplatine (4) mit einer Ansteuerschaltung für die Leuchtdioden (6) aufweist;
einem Elektromotor (2) zum Drehantrieb der Anzeigeeinheit, wobei die zumindest eine Reihe von Leuchtdioden oder Leuchtdioden-Gruppen (6) im wesentlichen senkrecht zu einer Antriebswelle (20) des Elektromotors (2) bzw. zu der Drehachse der Anzeigeeinheit ausgerichtet ist; und
einer Energie-Übertragungsvorrichtung zur Versorgung der Schaltungsplatine (4) und der Leuchtdioden (6) der Anzeigeeinheit mit elektrischer Energie,
**dadurch gekennzeichnet,**
**dass** die Versorgung der Schaltungsplatine (4) und der Leuchtdioden (6) der Anzeigeeinheit mit elektrischer Energie kontaktlos und mittels elektromagnetischer Induktion erfolgt; und
**dass** die Energie-Übertragungsvorrichtung einen von dem Elektromotor (2) angetriebenen Rotor (14), der mit Spulenkörpern (33) mit radial ausgerichteten Längsachsen zur Aufnahme von Spulen (15, 32) versehen ist, deren Spulenenden (13) mit der Anzeigeeinheit verbunden sind, und einen durch einen Permanentmagneten gebildeten ortsfesten Stator (16, 34, 35), der kreisringförmig und im radialen Abstand um den oder in dem Rotor (14) angeordnet ist, aufweist.

2. Vorrichtung nach Anspruch 1,
**dadurch gekennzeichnet,**
**dass** der Rotor (14) vier oder sechs Spulenkörper (33) aufweist.

3. Vorrichtung zur Anzeige von alpha-numerischen Zeichen und/oder Bildzeichen, mit einem Gehäuse (31);
einer in dem Gehäuse (31) drehbar um eine Drehachse (21) angeordneten Anzeigeeinheit, welche einen Träger (5), auf dem zumindest eine Reihe von Leuchtdioden oder Leuchtdioden-Gruppen (6) angeordnet ist, und eine Schaltungsplatine (4) mit einer Ansteuerschaltung für die Leuchtdioden (6) aufweist;
einem Elektromotor (2) zum Drehantrieb der Anzeigeeinheit, wobei die zumindest eine Reihe von Leuchtdioden oder Leuchtdioden-Gruppen (6) im wesentlichen senkrecht zu einer Antriebswelle (20) des Elektromotors (2) bzw. zu der Drehachse der Anzeigeeinheit ausgerichtet ist; und
einer Energie-Übertragungsvorrichtung zur Versorgung der Schaltungsplatine (4) und der Leuchtdioden (6) der Anzeigeeinheit mit elektrischer Energie,
**dadurch gekennzeichnet,**
**dass** die Versorgung der Schaltungsplatine (4) und der Leuchtdioden (6) der Anzeigeeinheit mit elektrischer Energie kontaktlos und mittels elektromagnetischer Induktion erfolgt; und
**dass** die Energie-Übertragungsvorrichtung eine auf der Schaltungsplatine (4) angeordnete Sekundärspule (25) und eine auf der Motorabtriebsseite angeordnete und mit elektrischer Energie beaufschlagte Primärspule (23), die der Sekundärspule (25) mit einem geringen Luftspalt gegenüberliegt, aufweist.

4. Vorrichtung nach Anspruch 3,
**dadurch gekennzeichnet,**
**dass** die Sekundärspule (25) auf der Schaltungsplatine (4) in Schichttechnik oder als Folie aufgetragen ist.

5. Vorrichtung nach Anspruch 4,
**dadurch gekennzeichnet,**
**dass** die Sekundärspule (25) in die Oberfläche der Schaltungsplatine (4) eingesetzt ist.

6. Vorrichtung nach einem der vorhergehenden Ansprüche,
**dadurch gekennzeichnet,**
**dass** die Spule(n) (15, 23, 25, 32) einen Eisenkern aufweist bzw. aufweisen.

7. Vorrichtung nach einem der vorhergehenden Ansprüche,
**dadurch gekennzeichnet,**
**dass** die Spule(n) (15, 23, 25, 32) in einem Vergusskörper eingebettet ist bzw. sind.

## Claims

1. A device for displaying alphanumeric symbols and/or graphic symbols comprising
a housing (31);
a displaying unit being arranged, rotatably about an axis of rotation (21), in said housing (31) and comprising a support means (5) on which at least one row of light emitting diodes or light emitting diode groups (6) is disposed and a circuit board (4) containing an actuating circuit for said light emitting diodes (6);
an electric motor (2) for rotary driving said displaying unit, wherein said at least one row of light emitting diodes or light emitting diode groups (6) is oriented substantially perpendicular to a drive shaft (20) of said electric motor (2) or said axis of rotation of said displaying unit, respectively; and
an energy transmitting means for supplying said circuit board (4) and said light emitting diodes (6) of said displaying unit with electrical energy,
**characterised in that**
supplying said circuit board (4) and said light emitting diodes (6) of said displaying unit with electrical energy is carried out contact-less and by means of electromagnetic induction; and
said energy transmitting means comprises a rotor (14) being driven by said electric motor (2) and provided with coil formers (33) having radially oriented longitudinal axes for receiving coils (15, 32) whose coil ends (13) are connected to said displaying unit, and a stationary stator (16, 34, 35) being formed by a permanent magnet and arranged in the form of a circular ring and at a radial spacing around or in said rotor (14).

2. A device according to claim 1,
**characterised in that**
said rotor (14) has four or six coil formers (33).

3. A device for displaying alphanumeric symbols and/or graphic symbols comprising a housing (31);
a displaying unit being arranged, rotatably about an axis of rotation (21), in said housing (31) and comprising a support means (5) on which at least one row of light emitting diodes or light emitting diode groups (6) is disposed and a circuit board (4) containing an actuating circuit for said light emitting diodes (6);
an electric motor (2) for rotary driving said displaying unit, wherein said at least one row of light emitting diodes or light emitting diode groups (6) is oriented substantially perpendicular to a drive shaft (20) of said electric motor (2) or said axis of rotation of said displaying unit, respectively; and
an energy transmitting means for supplying said circuit board (4) and said light emitting diodes (6) of said displaying unit with electrical energy,
**characterised in that**
supplying said circuit board (4) and said light emitting diodes (6) of said displaying unit with electrical energy is carried out contact-less and by means of electromagnetic induction; and
said energy transmitting means comprises a secondary coil (25) being arranged on said circuit board (4) and a primary coil (23) being arranged on the motor drive output and being acted upon by electrical energy which primary coil is disposed in opposite relationship with a small air gap in relation to said secondary coil (25).

4. A device according to claim 3,
**characterised in that**
said secondary coil (25) is applied to said circuit board (4) by a laminating procedure or in the form of a foil.

5. A device according to claim 4,
**characterised in that**
said secondary coil (25) is fitted into the surface of said circuit board (4).

6. A device according to one of preceding claims,
**characterised in that**
the coil or coils (15, 23, 25, 32) has or have an iron core.

7. A device according to one of preceding claims,
**characterised in that**
the coil or coils (15, 23, 25, 32) is or are embedded in a cast body.

## Revendications

1. Dispositif pour afficher des caractères alphanumériques et/ou des symboles graphiques, avec
un boîtier (31) ;
une unité d'affichage, placée rotative autour d'un axe de rotation (21) dans le boîtier (31), qui présente un support (5) sur lequel au moins une série de diodes électroluminescentes ou de groupes de diodes électroluminescentes (6) est placée, et une platine de commutation (4) avec un circuit de commande pour les diodes électroluminescentes (6) ;
un moteur électrique (2) pour la commande rotative de l'unité d'affichage, la série de diodes électroluminescentes ou de groupes de diodes électroluminescentes (6) qui existe au moins étant orientée substantiellement perpendiculairement par rapport à un arbre de commande (20) du moteur électrique (2) ou à l'axe de rotation de l'unité d'affichage; et
un dispositif de transmission d'énergie pour alimenter la platine de commutation (4) et les diodes électroluminescentes (6) de l'unité d'affichage avec de l'énergie électrique,
**caractérisé en ce**
**que** l'alimentation de la platine de commutation (4) et des diodes électroluminescentes (6) de l'unité d'affichage avec de l'énergie électrique se fait sans contact et par induction électromagnétique; et
**que** le dispositif de transmission d'énergie présente un rotor (14), commandé par le moteur électrique (2), qui est pourvu de corps de bobine (33) avec des axes longitudinaux orientés radialement pour recevoir les bobines (15, 32) dont les extrémités de bobines (13) sont reliées à l'unité d'affichage, et un stator (16, 34, 35) fixe, formé par un aimant permanent, qui est placé en forme d'anneau de cercle et à un écart radial autour du rotor ou dans le rotor (14).

2. Dispositif selon la revendication 1,
**caractérisé en ce**
**que** le rotor (14) présente quatre ou six corps de bobines (33).

3. Dispositif pour afficher des caractères alphanumériques et/ou des symboles graphiques, avec
un boîtier (31);
une unité d'affichage, placée rotative autour d'un axe de rotation (21) dans le boîtier . (31), qui présente un support (5) sur lequel au moins une série de diodes électroluminescentes ou de groupes de diodes électroluminescentes (6) est placée, et une platine de commutation (4) avec un circuit de commande pour les diodes électroluminescentes (6);
un moteur électrique (2) pour la commande rotative de l'unité d'affichage, la série de diodes électroluminescentes ou de groupes de diodes électroluminescentes (6) qui existe au moins étant orientée substantiellement perpendiculairement par rapport à
l'arbre de commande (20) du moteur électrique (2) ou à l'axe de rotation de l'unité d'affichage; et un dispositif de transmission d'énergie pour alimenter la platine de commutation (4) et les diodes électroluminescentes (6) de l'unité d'affichage avec de l'énergie électrique,
**caractérisé en ce**
**que** l'alimentation de la platine de commutation (4) et des diodes électroluminescentes (6) de l'unité d'affichage avec de l'énergie électrique se fait sans contact et par induction électromagnétique; et
**que** le dispositif de transmission d'énergie présente une bobine secondaire (25) placée sur la platine de commutation (4) et une bobine primaire (23), placée du côté de la sortie du moteur et chargée d'énergie électrique, qui est située en face de la bobine secondaire (25) avec un léger entrefer.

4. Dispositif selon la revendication 3,
**caractérisé en ce**
**que** la bobine secondaire (25) est appliquée sur la platine de commutation (4) selon la technique des couches ou comme feuille.

5. Dispositif selon la revendication 4,
**caractérisé en ce**
**que** la bobine secondaire (25) est mise en place dans la surface de la platine de commutation (4).

6. Dispositif selon l'une des revendications précédentes,
**caractérisé en ce**
**que** la (les) bobine (s) (15,23, 25, 32) présente(nt) un noyau de fer.

7. Dispositif selon l'une des revendications précédentes,
**caractérisé en ce**
**que** la (les) bobine (s) (15, 23, 25, 32) est (sont) encastrée(s) dans un corps de scellement.
